# EUROPEAN PATENT APPLICATION

(11) **EP 4 316 726 A1**
(43) Date of publication of application: **07.02.2024**
(21) Application number: 21934841.4
(22) Date of filing: 30.03.2021
(51) Int. Cl.: B23K 26/21, B23K 26/00

(54) **BLANK, METHOD FOR PRODUCING BLANK, AND MEMBER**

(71) Applicant: NIPPON STEEL CORPORATION, Chiyoda-ku Tokyo 100-8071 (JP)
(72) Inventor: ABE, Masahiko, Tokyo 100-8071 (JP); ITO, Yasuhiro, Tokyo 100-8071 (JP)
(74) Representative: Zimmermann & Partner Patentanwälte mbB
(86) International application number: PCT/JP2021/013609
(87) International publication number: WO 2022/208670

(57) **Abstract**

There is provided a blank in which two or more starting materials that overlap each other are joined with each other by laser welding, including the blank has a single layer region, in which only one of the starting materials is present, and a multi-layer region, in which two or more of the starting materials overlap each other, laser welding is continuously applied to the multi-layer region and the single layer region, and one end of a laser weld zone is located at an end portion of the single layer region of the blank, and the one end forms a concave-shaped welding end portion having a concave shape when the blank is viewed from an end face.

## Description

### TECHNICAL FIELD

The present invention relates to a blank, to a method for producing the blank, and to a member.

### BACKGROUND ART

In order to reduce the weight of and to improve collision performance of the vehicle body of an automobile, there has been advances in increasing the strength of and reducing the wall thickness of members of the automobile. As another approach, an increase in strength of and a reduction in wall thickness of members of an automobile can also be achieved by using members in which only required portions has a thick wall, thus allowing the members to have different sheet thicknesses. For example, it can be considered that a patchwork blank is produced by welding, using a patchwork technique, two or more starting materials (for example, steel materials) that overlap each other, and the member of an automobile is produced by using the patchwork blank. In the patchwork blank, a plurality of starting materials overlap each other to have a large wall thickness and hence, it is possible to increase strength of the portion at which the wall thickness is increased.

The patchwork blank is obtained such that the position at which irradiation of the starting material with a laser beam starts is set as an initial end, the position at which irradiation ends is set as a terminal end, and the starting materials are joined with each other by moving a laser irradiation apparatus from the initial end to the terminal end with the laser irradiation apparatus emitting a laser beam. In joining the starting materials with each other, when the terminal end of a laser weld zone is present within the starting material, there may be cases in which stress concentration occurs due to the shape of the laser weld zone, so that the starting material ruptures. Such a tendency becomes more noticeable as the starting material increases in strength.

Patent Document 1, for example, discloses a laser lap welding method in which, in order to increase joint strength of a laser weld zone, a plurality of workpieces that overlap each other are welded to each other by scanning and linearly irradiating, with a laser beam, a linear scanning section ranging from a welding initial end to a welding terminal portion on one side surface. When the laser beam arrives at a laser output control position, which is at a position a set time period before reaching the welding terminal portion, a control is performed so that the output of the irradiating laser beam gradually decreases until reaching the welding terminal portion. Then, when the laser beam reaches the welding terminal portion, a rotational scan is performed at the terminal portion about an axis extending in a thickness direction of the workpieces to cause a molten portion of molten metal to flow in a circular shape. Thus, tensile stress generated at the time of the molten metal solidifying is equalized, thus preventing solidification cracking, which is likely to occur at the welding terminal portion of laser scanning, and increasing joint strength of the workpieces that overlap each other.

Patent Document 2 discloses a metal welded structure including a solidified portion having a large depth from an overlapping position in cross section taken along a direction perpendicular to an advancing direction of welding and a solidified portion having a small depth from the overlapping position in cross section taken along the direction perpendicular to the advancing direction of welding, the solidified portion having a large depth being formed by performing irradiation with laser light having large irradiation energy, the solidified portion having a small depth being formed by performing irradiation with laser light having small irradiation energy. Thus, welding having high welding strength is achieved.

### LIST OF PRIOR ART DOCUMENTS

### PATENT DOCUMENT

Patent Document 1: WO 2017/122681
Patent Document 2: WO 2017/047050

### SUMMARY OF INVENTION

### TECHNICAL PROBLEM

However, the invention described in the above-mentioned Patent Document 1 requires fine laser irradiation control, in which the output of the laser beam is gradually decreased from a point before the laser beam reaches the welding terminal portion, and a rotational scan is performed at the terminal portion to cause the molten portion to flow in a circular shape. Further, in the invention described in the above-mentioned Patent Document 2, welding with a relatively high output laser beam and welding with a relatively low output laser beam are performed, that is, it is necessary to perform laser irradiation two times for the same position.

The present invention has been made in view of the above-mentioned problems, and an objective of the present invention is to provide a blank, a method for producing the blank, and a member, which are feasible by a simple method, and in which rupture caused by a laser weld zone is suppressed.

### SOLUTION TO PROBLEM

According to an aspect of the present invention in order to achieve the above-mentioned object, there is provided a blank in which two or more starting materials that overlap each other are joined with each other by laser welding, including the blank has a single layer region, in which only one of the starting materials is present, and a multi-layer region, in which two or more of the starting materials overlap each other, laser welding is continuously applied to the multi-layer region and the single layer region, and one end of a laser weld zone is located at an end portion of the single layer region of the blank, and the one end forms a concave-shaped welding end portion having a concave shape when the blank is viewed from an end face.

The single layer region of the blank may have an opening portion, and the concave-shaped welding end portion may be located at an end portion of the opening portion.

Tensile strength of a first starting material forming the single layer region may be lower than tensile strength of a second starting material that is made to overlap the first starting material in the multi-layer region.

Each of the starting materials may be a steel material.

According to another aspect of the present invention, to solve the problems, there is provided a method for producing a blank in which two or more starting materials that overlap each other are joined with each other by laser welding, the method including: preparing an overlapped member by making one or two or more of the starting materials overlap a partial region of one of the starting materials, the overlapped member having a single layer region, in which only one of the starting materials is present, and a multi-layer region, in which two or more of the starting materials overlap each other; and continuously applying laser welding to the multi-layer region and the single layer region of the overlapped member such that one end of a laser weld zone of the blank is located at an end portion of the single layer region of the blank, and the one end forms a concave-shaped welding end portion having a concave shape when the blank is viewed from an end face.

According to still another aspect of the present invention, to solve the problems, there is provided a processed product producing method for producing a processed product for which a member including two or more starting materials that overlap each other, the member being shaped into a predetermined shape, including the member has a single layer region, in which only one of the starting materials is present, and a multi-layer region, in which two or more of the starting materials overlap each other, the multi-layer region and the single layer region are joined with each other continuously by laser welding, and one end of a laser weld zone is located at an end portion of the single layer region of the member, and the one end forms a concave-shaped welding end portion having a concave shape when the member is viewed from an end face.

The single layer region of the member may have an opening portion, and the concave-shaped welding end portion may be located at an end portion of the opening portion.

### ADVANTAGEOUS EFFECTS OF INVENTION

As described above, according to the present invention, it is possible to suppress, by a simple method, rupture caused by a laser weld zone.

### BRIEF DESCRIPTION OF DRAWINGS

[Figure 1] Figure 1 is a schematic perspective view illustrating a blank according to one embodiment of the present invention.
[Figure 2] Figure 2 are a plan view and cross-sectional views schematically illustrating the shape of a blank in which steel materials, and the steel materials are irradiated with the laser beam, thus having a laser weld zone.
[Figure 3] Figure 3 is a schematic view illustrating one constitutional example of the blank according to this embodiment.
[Figure 4] Figure 4 is a schematic view illustrating other constitutional example of the blank according to this embodiment.
[Figure 5] Figure 5 is a schematic view illustrating other constitutional example of the blank according to this embodiment.
[Figure 6] Figure 6 is a schematic view illustrating other constitutional example of the blank according to this embodiment.
[Figure 7] Figure 7 is a schematic view illustrating a state in which the two steel sheets of an example overlap each other and laser weld zones formed in cases 1 to 4.

### DESCRIPTION OF EMBODIMENTS

A preferred embodiment of the present invention will be described below in detail with reference to the accompanying drawings. In the present specification and drawings, components having substantially the same functions and structures are denoted by the same reference characters, and the repeated description thereof will be omitted.

### [1. Blank and method for producing blank]

A blank according to one embodiment of the present invention is produced by joining, by laser welding, two or more starting materials that overlap each other. First, an overlapped member is prepared by making one or two or more starting materials overlap a partial region of one starting material, the overlapped member having a single layer region, in which only one starting material is present, and a multi-layer region, in which two or more starting materials overlap each other. Then, laser welding is continuously applied to the multi-layer region and the single layer region of the overlapped member. The starting materials are joined with each other by this laser welding such that one end of a laser weld zone of the blank is located at an end portion of the single layer region of the blank, and the one end forms a concave-shaped welding end portion having a concave shape when the blank is viewed from an end face.

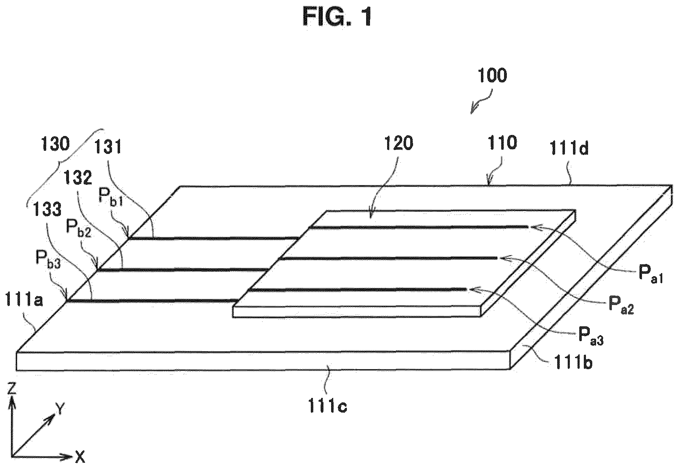

As shown in Figure 1, for example, a blank 100 according to this embodiment is a blank (that is, a patchwork blank) in which two or more starting materials that overlap each other, for example, starting materials 110, 120, are joined with each other by laser welding. In the blank 100 shown in Figure 1, a region formed by only one starting material 110 is also referred to as the "single layer region", and a region in which the starting materials 110, 120 overlap each other is also referred to as the "multi-layer region. A metallic material, for example, a steel material or an aluminum material, is used for forming each of the starting materials 110, 120. Alternatively, a CFRP (Carbon Fiber Reinforced Plastic) material, a magnesium alloy material, or a titanium alloy material may be used for forming each of the starting materials 110, 120.

The blank 100 is produced by joining the starting materials 110, 120 with each other by relatively moving a laser irradiation apparatus from an initial end to a terminal end with the laser irradiation apparatus emitting a laser beam to the starting materials 110, 120 that overlap each other. A laser weld zone 130 of the blank 100 is a portion solidified after the starting materials melt due to the laser beam with which the starting materials 110, 120 are irradiated. Three laser weld zones 131, 132, 133 are formed on the blank 100 shown in Figure 1.

In the blank 100 according to this embodiment, laser welding is continuously applied to the multi-layer region and the single layer region, and one end of the laser weld zone 130 is located at the end portion of the single layer region of the blank 100. Each of the laser weld zones 131, 132, 133 has the initial end at which laser irradiation starts, and has the terminal end at which laser irradiation ends. In the blank 100 shown in Figure 1, welding end portions Pₐ₁, Pₐ₂, Pₐ₃ of the laser weld zones 131, 132, 133 at one end are the initial ends, and welding end portions P_{b1}, P_{b2}, P_{b3} of the laser weld zones 131, 132, 133 at the other end are the terminal ends. That is, the welding end portions P_{b1}, P_{b2}, P_{b3} being the terminal ends are located at an end portion 111a of the single layer region of the blank 100. By continuously applying laser welding from the multi-layer region, in which two or more starting materials overlap each other, to the single layer region, which is formed by only one starting material, joining is sufficiently performed as far as the end portion of the region in which the starting materials overlap each other, that is, the multi-layer region and hence, it is possible to increase joint strength.

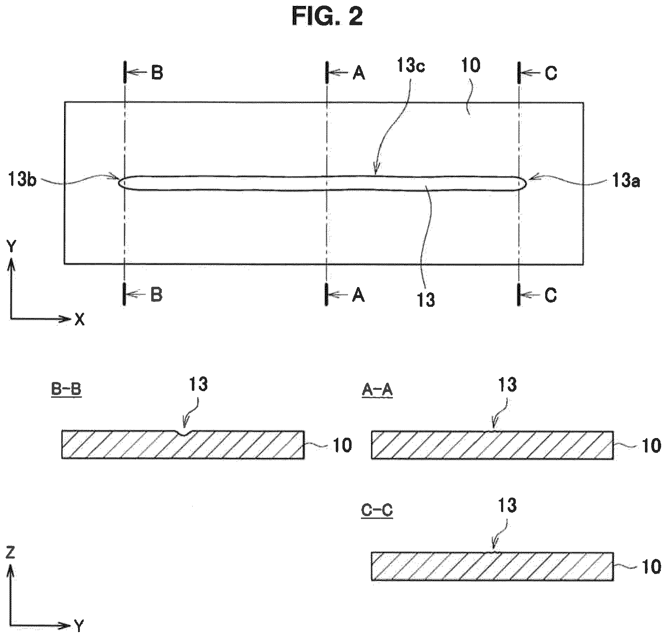

When a stress concentration portion is generated in the starting material due to the shape of the laser weld zone 130, there may be cases in which the starting materials 110, 120 rupture. Regarding the shape of the laser weld zone 130, this embodiment focuses on the shape of the laser weld zone 130 when viewed in a plan view (that is, when viewed from a Z direction) and the shape of the cut surface of the laser weld zone 130 taken along a YZ plane when viewed from the end face (that is, when viewed from an X direction). Figure 2 shows a plan view and cross-sectional views schematically showing the shape of a blank 10 in which steel materials, being one example of the starting materials, overlap each other and are joined with each other, and the steel materials are irradiated with the laser beam, thus having a laser weld zone 13. The blank 10 is formed by making two steel materials overlap each other. However, to simplify the description, the two steel materials that overlap each other are not shown in Figure 2, and are shown as one blank 10 in Figure 2. Assume that the laser weld zone 13 is formed from an initial end 13a toward a terminal end 13b.

As shown in Figure 2, in general, each of the initial end 13a and the terminal end 13b of the laser weld zone 13 has a tapered shape when viewed in a plan view. The laser weld zone 13 includes a constant portion 13c having a substantially constant welding width and, in the cut surface of the constant portion 13c taken along the YZ plane, the sheet thickness (a length in the Z direction) is substantially constant as shown in an A-A cross-sectional view. In contrast, in the cut surface of the terminal end 13b taken along the YZ plane, the laser weld zone 13 has a concave shape as shown in a B-B cross-sectional view. This shape is a result of the way of performing laser irradiation. With the movement of a position irradiated with the laser beam, a steel material at a portion irradiated with the laser beam melts, and molten metal flows toward the initial end 13a. Therefore, there is no molten metal that flows into the terminal end 13b and hence, the terminal end 13b is formed into a concave shape. That is, the terminal end 13b forms a concave-shaped welding end portion having a concave shape when the blank 100 is viewed from the end face. As shown in a C-C cross-sectional view, in the cut surface of the initial end 13a taken along the YZ plane, the sheet thickness is substantially constant in the same manner as the constant portion 13c.

As shown in Figure 2, the cut surface of the terminal end 13b of the laser weld zone 13 has a concave shape when viewed from the end face, so that the terminal end 13b has a smaller cross-sectional area than the constant portion 13c. Therefore, stress is more likely to concentrate at the terminal end 13b than at the initial end 13a.

In view of the above, the blank 100 according to this embodiment is produced such that the concave-shaped welding end portion of the laser weld zone 130 is located at the end portion of the single layer region of the blank 100 to prevent the concave-shaped welding end portion of the laser weld zone 130 from being provided within the single layer region of the laser weld zone 130 (that is, at a position that is not the end portion). Thus, the generation of a stress concentration portion within the starting material can be eliminated and hence, rupture of the starting materials 110, 120 can be suppressed.

The description will be made in more detail. When the terminal end of the laser weld zone 130 is located within the single layer region, a concave-shaped portion at the terminal end is surrounded and restrained by the material that is not irradiated with the laser beam and hence, tensile residual stress increases. Such an increase in tensile residual stress is a cause of the occurrence of delayed fracture (a phenomenon in which the blank 100 ruptures after the lapse of a certain time period from completion of the welding). When weld metal of the laser weld zone 130 solidifies, the weld metal still has a high temperature. When the weld metal cools to room temperature from the high temperature, the weld metal tends to contract. However, the weld metal cannot contract in the case in which the periphery of the weld metal is completely restrained as in the case of the terminal end in the starting material. Therefore, tensile stress is added within the elastic region of the material, thus causing the material to expand and hence, contraction caused by cooling is canceled.

Particularly, laser welding is performed by the output of the laser beam that joins two or more starting materials with each other. Therefore, in a region in which only one starting material is present, so-called burn through noticeably occurs, in which a material melted due to irradiation with a laser beam falls or explodes and flies off. When the terminal end of the laser weld zone 130 is located within the single layer region, a sheet thickness at the terminal end is further reduced due to burn through at the terminal end, so that the starting material becomes likely to rupture.

In contrast, in performing laser welding, when irradiation is performed with a laser beam such that the laser beam passes through the end portion of the single layer region of the blank, the terminal end of the laser weld zone 130 reaches the end portion of the single layer region. In the case in which the terminal end of the laser weld zone 130 is located at the end portion of the single layer region as described above, the periphery of the concave-shaped portion at the terminal end is not completely surrounded and restrained by the material that is not irradiated with a laser beam and hence, it is possible to reduce concentration of tensile residual stress at the concave-shaped portion at the terminal end. Accordingly, it is possible to suppress rupture of the starting materials 110, 120.

The end portion of the blank 100 refers to, of the end portions of the starting materials 110, 120, the end portion that forms the profile of the blank 100 when the blank 100 is viewed in a plan view. In the blank 100 shown in Figure 1, a second starting material 120 is joined to a partial region within the flat surface of the first starting material 110 and hence, end portions 111a to 111d of the first starting material 110 form the end portion of the blank 100.

The end portion of the blank 100 includes not only the outer contour of the starting material 110 but also an end portion that forms the inner contour of the starting material 110. For example, in the case in which the starting material 110 has an opening portion, the end portion of the opening portion forms the inner contour of the starting material 110, thus may also form the end portion of the blank 100. Also in the case in which the end portion of the laser weld zone 130 is located at the end portion of the opening portion, in the same manner as the case in which the end portion of the laser weld zone 130 is located at the end portion of the starting material 110, the generation of a stress concentration portion within the starting material can be eliminated and hence, rupture of the starting materials 110, 120 can be suppressed.

### [2. Constitutional example of blank]

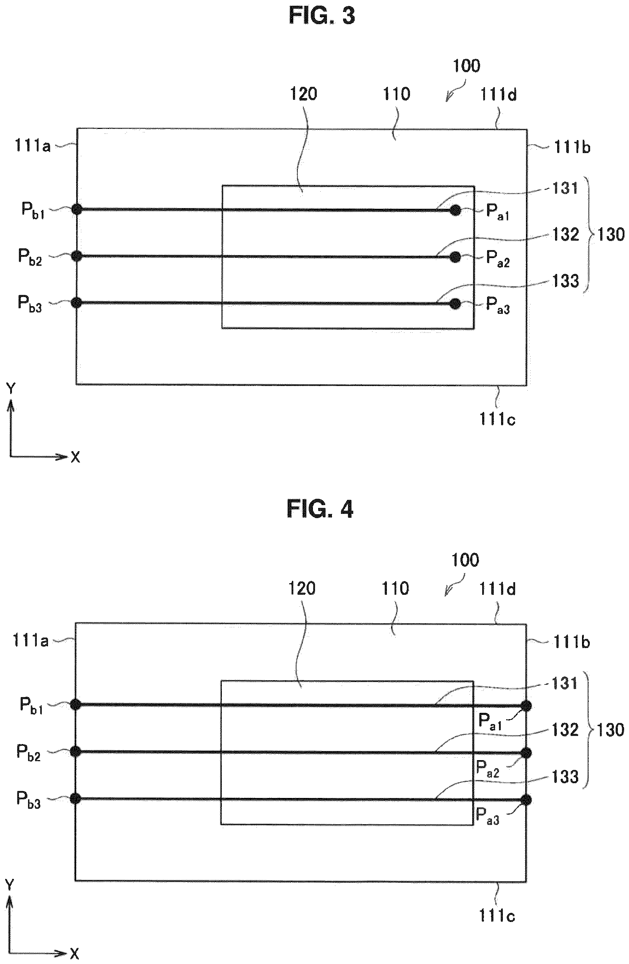

Figure 3 to Figure 6 show constitutional examples of the blank 100 according to this embodiment. Each of Figure 3 to Figure 6 is a schematic view showing one constitutional example of the blank according to this embodiment. In Figure 3 to Figure 6, to facilitate understanding of the positions of welding end portions (Pₐ₁ to Pₐ₃, P_{b1} to P_{b3}), being the initial ends and the terminal ends of the laser weld zone 130, the welding end portions (Pₐ₁ to Pₐ₃, P_{b1} to P_{b3}) are shown by circular objects.

### (1) The case in which one end of the laser weld zone is located at the end portion of the blank (no opening portion)

Figure 3 is a plan view of Figure 1, and shows the blank 100 in which one end of the laser weld zone 130 is located at the end portion of the single layer region of the blank 100. The blank 100 is formed by laser welding the first starting material 110 with the second starting material 120 that is made to overlap a partial region within the flat surface of the first starting material 110. In the blank 100 shown in Figure 3, joining is made by three laser weld zones 131, 132, 133. The welding end portions Pₐ₁ to Pₐ₃ of the laser weld zones 131, 132, 133 at one end are located within the multi-layer region, in which the first starting material 110 and the second starting material 120 overlap each other, (that is, within the starting material). In contrast, the welding end portions P_{b1} to P_{b3} of the laser weld zones 131, 132, 133 at the other end are located at the end portion 111a of the single layer region of the blank 100. Thus, a portion at which stress is likely to concentrate can be eliminated from the starting material and hence, it is possible to suppress rupture of the blank 100.

The welding end portions P_{b1}, P_{b2}, P_{b3} of the laser weld zones 131, 132, 133 that are located at the end portion 111a of the single layer region of the blank 100 are terminal ends of laser welding. As described with reference to Figure 2, the terminal end of the laser weld zone 130 forms the concave-shaped welding end portion. Therefore, stress is more likely to concentrate at the terminal ends of the laser weld zones 131, 132, 133 than at the initial ends. Accordingly, by setting the welding end portions P_{b1}, P_{b2}, P_{b3} of the laser weld zones 131, 132, 133 that are located at the end portion 111a of the blank 100 as the terminal ends of laser welding, concentration of stress in the starting material can be effectively reduced and hence, it is possible to suppress rupture of the blank 100.

### (2) The case in which both ends of the laser weld zone are located at the end portions of the blank (no opening portion)

Figure 4 shows the blank 100 in which both ends of the laser weld zone 130 are located at the end portion of the single layer region of the blank 100. In the same manner as the blank 100 shown in Figure 3, the blank 100 shown in Figure 4 is formed by laser welding the first starting material 110 with the second starting material 120 that is made to overlap a partial region within the flat surface of the first starting material 110. In the blank 100 shown in Figure 4, the welding end portions Pₐ₁ to Pₐ₃ of three laser weld zones 131, 132, 133 at one end are located at an end portion 111b of the single layer region of the blank 100. The welding end portions P_{b1} to P_{b3} of the laser weld zones 131, 132, 133 at the other end are located at the end portion 111a of the single layer region of the blank 100. The welding end portions P_{b1}, P_{b2}, P_{b3} are terminal ends of laser welding. Also in this case, the terminal ends of the laser weld zones 131, 132, 133, each of which is a portion at which stress is likely to concentrate, are eliminated from the starting material and hence, it is possible to suppress rupture of the blank 100.

### (3) The case in which one end of the laser weld zone is located at the end portion of the opening portion

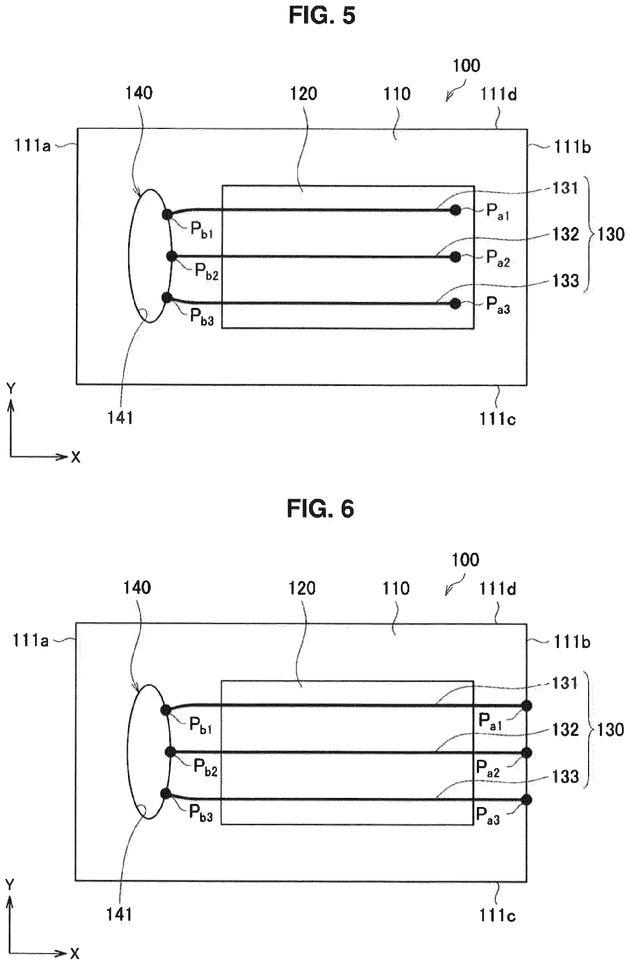

Figure 5 shows the blank 100 in which one end of the laser weld zone 130 is located at an end portion 141 of an opening portion 140. In the same manner as the blanks 100 shown in Figure 3 and Figure 4, the blank 100 shown in Figure 5 is formed by laser welding the first starting material 110 with the second starting material 120 that is made to overlap a partial region within the flat surface of the first starting material 110.

In the blank 100 shown in Figure 5, the welding end portions Pₐ₁ to Pₐ₃ of three laser weld zones 131, 132, 133 at one end are located within the multi-layer region in which the first starting material 110 and the second starting material 120 overlap each other (that is, within the starting material). In contrast, the welding end portions P_{b1} to P_{b3} of the laser weld zones 131, 132, 133 at the other end are located at the end portion 141 of the opening portion 140 formed in the single layer region, in which only the first starting material 110 is present.

The welding end portions P_{b1}, P_{b2}, P_{b3} of the laser weld zones 131, 132, 133 that are located at the end portion 141 of the opening portion 140 are the terminal ends of laser welding. As described with reference to Figure 2, the terminal end of the laser weld zone 130 forms a concave-shaped welding end portion. Therefore, stress is more likely to concentrate at the terminal ends of the laser weld zones 131, 132, 133 than at the initial ends. Accordingly, by setting the welding end portions P_{b1}, P_{b2}, P_{b3} of the laser weld zones 131, 132, 133 that are located at the end portion 141 of the opening portion 140, which is formed in the single layer region, as the terminal ends of laser welding, concentration of stress in the starting material can be effectively reduced. That is, in the same manner as the case described with reference to Figure 3, a portion at which stress is likely to concentrate can be eliminated from the starting material and hence, it is possible to suppress rupture of the blank 100.

### (4) The case in which one end of the laser weld zone is located at the outer contour of the blank, and the other end of the laser weld zone is located at the inner contour of the blank (end portion of opening portion)

Figure 6 shows the blank 100 in which one end of the laser weld zone 130 is located at the end portion 111b of the blank 100, and the other end of the laser weld zone 130 is located at the end portion 141 of the opening portion 140. In the same manner as the blank 100 shown in Figure 3 to Figure 5, the blank 100 shown in Figure 6 is formed by laser welding the first starting material 110 with the second starting material 120 that is made to overlap a partial region within the flat surface of the first starting material 110. In the blank 100 shown in Figure 6, the welding end portions Pₐ₁ to Pₐ₃ of three laser weld zones 131, 132, 133 at one end are located at the end portion 111b of the single layer region of the blank 100. The welding end portions P_{b1} to P_{b3} of the laser weld zones 131, 132, 133 at the other end are located at the end portion 141 of the opening portion 140 formed in the single layer region, in which only the first starting material 110 is present. The welding end portions P_{b1}, P_{b2}, P_{b3} are terminal ends of laser welding. Also in this case, the terminal ends of the laser weld zones 131, 132, 133, each of which is a portion at which stress is likely to concentrate, are eliminated from the starting material and hence, it is possible to suppress rupture of the blank 100.

The constitutional examples of the blank 100 according to this embodiment have been described heretofore. It is sufficient for the blank 100 according to this embodiment to have a configuration in which one end of the laser weld zone 130 is located at the end portion of the single layer region of the blank 100, and the one end forms the concave-shaped welding end portion having a concave shape when the blank is viewed from the end face. Therefore, the blank 100 according to this embodiment may also have a mode other than the configurations shown in Figure 3 to Figure 6.

For example, in each of the blanks 100 shown in Figure 3 to Figure 6, one end of each of three laser weld zones 131, 132, 133 (the welding end portions P_{b1} to P_{b3}, being the terminal ends) is located at the same end portion of the single layer region of the blank 100. However, each welding end portion may be located at a different end portion of the single layer region of the blank 100 (for example, any of the end portions 111a to 111d).

In the case in which both ends of the laser weld zone 130 are located at the end portions of the blank 100, a configuration may be adopted in which both ends of the laser weld zone 130 are located at the end portions of opening portions other than the configuration in which both ends of the laser weld zones 131, 132, 133 are located at the end portions (outer contours) of the first starting material 110 (see Figure 4) and the configuration in which one end of each of the laser weld zones 131, 132, 133 is located at the end portion (outer contour) of the first starting material 110 and the other end of each of the laser weld zones 131, 132, 133 is located at the end portion 141 (inner contour) of the opening portion 140 (see Figure 6). In this case, two end portions of the laser weld zone 130 may be located at the end portion of the same opening portion, or may be located at end portions of different opening portions. Note that the number of laser weld zones 130 is not particularly limited.

Regarding the opening portion 140 of the blank 100, the shape of the opening portion 140 is not particularly limited. For example, the opening portion 140 may have any shape, such as a circular shape or a quadrangular shape. The patchwork blank is used in a case in which, in order to increase strength of a member, such as the member of an automobile, for example, another starting material is joined to a base starting material at a position that requires high strength. In such a case, it is often the case that, to a partial region of the single layer region of the base starting material, a starting material having higher tensile strength than the partial region is welded. In such a blank 100, by providing the opening portion 140 in the base starting material having relatively low tensile strength, it is possible to prevent a reduction in strength of the blank 100 caused by providing the opening portion 140.

It is not always necessary to form the opening portion 140 in order to cause the concave-shaped welding end portion of the laser weld zone 130 to be located at the opening portion 140, and an existing opening portion may be used.

In the above description, the description has been made for the blank 100 in which the two starting materials 110, 120 overlap each other. However, the present invention is not limited to such an example. The blank may be produced by making three or more starting materials overlap each other.

The blank 100 according to this embodiment is used in producing a member in which a partial region is required to have higher strength than other regions, for example. Specifically, the blank 100 according to this embodiment may be used to produce the member of an automobile, such as a B pillar, a side sill, or a front side member. Thus, rupture of a produced member at a laser weld zone can be suppressed, and a reduction in weight and an increase in strength of the member can be achieved.

### [3. Member]

Next, a member according to this embodiment will be described. The member of this embodiment includes two or more starting materials that overlap each other, and is formed into a predetermined shape. The member has a single layer region, in which only one starting material is present, and a multi-layer region, in which two or more starting materials overlap each other, and the multi-layer region and the single layer region are joined with each other continuously by laser welding. One end of a laser weld zone is located at an end portion of the single layer region of the member, and the one end forms a concave-shaped welding end portion having a concave shape when the member is viewed from an end face.

In the same manner as the end portion of the blank 100, the end portion of the member is an end portion forming the profile of the member when viewed in a plan view, and includes not only an end portion forming the outer contour of the member but also an end portion forming the inner contour of the member. That is, in the case in which the member has an opening portion, the end portion of the opening portion forms the inner contour of the member, thus may form the end portion of the member. In the case in which the member has the opening portion as described above, the concave-shaped welding end portion of the laser weld zone may be located at the end portion of the opening portion. The opening portion of the member according to this embodiment is not limited to the opening portion formed to cause the concave-shaped welding end portion of the laser weld zone to be located at the opening portion, and may be an opening portion formed for another objective. For example, the opening portion of the member according to this embodiment may be an opening portion formed to cause another member to be inserted through the member according to this embodiment.

The member of this embodiment is produced using the above-mentioned blank 100, for example. Specifically, the member of this embodiment may be produced by a step of forming a blank by laser welding two or more starting materials in an overlapping state, and a step of shaping the formed blank into a predetermined shape by heating and pressing the formed blank. In the step of forming a blank, the starting materials 110, 120 are laser welded to each other such that, as shown in Figure 1, for example, one end of the laser weld zone 130 is located at the end portion of the single layer region of the blank 100, and the one end forms the concave-shaped welding end portion having a concave shape when the blank is viewed from the end face. The member can be shaped by processing the blank 100 produced in this manner. In shaping the member, the concave-shaped welding end portion of the laser weld zone 130 is located at the end portion of the member.

The member of this embodiment may also be produced by a step of preparing two or more shaped articles shaped into predetermined shapes by heating and pressing each of two or more starting materials that overlap each other, and by a step of performing laser welding on the two or more shaped articles in an overlapping state. For example, a configuration may be adopted in which, after two shaped articles are shaped by hot stamping, laser welding is performed on the two shaped articles in an overlapping state. In the step of performing laser welding on a plurality of shaped articles in this manner, the shaped articles are laser welded to each other such that one end of a laser weld zone is located at the end portion of the single layer region of the member to be produced.

The end portion of the member is as described above, and "a mode in which one end of the laser weld zone is located at the end portion of the member" is substantially the same as the mode of the blank 100 described above. That is, one end of the laser weld zone may be located at the outer contour of the member, or may be located at the inner contour of the member (the end portion of the opening portion). One end of the laser weld zone that is located at the end portion of the member is caused to be a terminal end forming the concave-shaped welding end portion having a concave shape when the member is viewed from the end face. Also in the case in which the member is formed by applying laser welding to the plurality of shaped articles as described above, one end of the laser weld zone is located at the end portion of the member, and is caused to form the concave-shaped welding end portion. With such a configuration, rupture at the laser weld zone can be suppressed, and a reduction in weight and an increase in strength of the member can be achieved.

Specific examples of the member of this embodiment include members of an automobile, such as a B pillar, a side sill, and a front side member. In the case in which the member of this embodiment is a B pillar, examples of the above-mentioned opening portion include an opening portion that allows a hinge to pass therethrough and an opening portion that allows a positioning pin to pass therethrough at the time of shaping.

### [4. Summary]

The blank according to one embodiment of the present invention, the method for producing the blank, and the member have been described heretofore. The blank has the single layer region, in which only one starting material is present, and the multi-layer region, in which two or more starting materials overlap each other, and is produced by joining the multi-layer region and the single layer region with each other continuously by laser welding. In joining the starting materials with each other, the starting materials are laser welded such that one end of the laser weld zone irradiated with a laser beam is located at the end portion of the single layer region of the blank, and the one end forms the concave-shaped welding end portion. Thus, a stress concentration portion can be eliminated from the starting material by a simple method and hence, it is possible to suppress rupture of the blank or the member caused by the laser weld zone.

### EXAMPLE

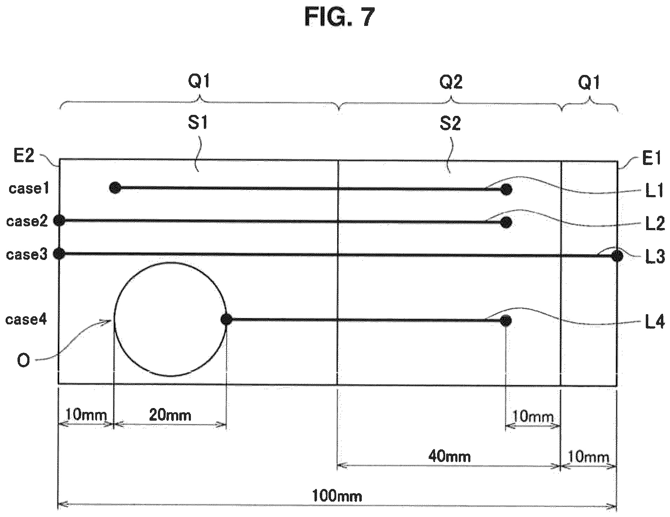

Two steel sheets, that is, a steel sheet with 1.5 GPa or higher (first steel sheet) having a length of 100 mm, a sheet width of 40 mm, and a sheet thickness of 1.4 mm and a steel sheet with 1.5 GPa or higher (second steel sheet) having a length of 40 mm, a sheet width of 40 mm, and a sheet thickness of 1.4 mm, were made to overlap each other, and were joined with each other by performing laser welding along the longitudinal direction. Then, the shapes of laser weld zones were observed. Figure 7 shows a state in which the two steel sheets of an example overlap each other, and shows laser weld zones formed in cases 1 to 4, which will be described later.

As in the case of the blank 100 shown in Figure 1, two steel sheets S1, S2 shown in Figure 7 that were made to overlap each other had a single layer region Q1, in which only the first steel sheet S1 is present, and a multi-layer region Q2, in which the first steel sheet S1 and the second steel sheet S2 were made to overlap each other. Specifically, the second steel sheet S2 was made to overlap the first steel sheet S1 such that, in the longitudinal direction, one end of the second steel sheet S2 was located at a position 10 mm away from one end portion of the first steel sheet S1 (assumed as an "end portion E1") toward the other end portion of the first steel sheet S1 (assumed as an "end portion E2"). That is, in the longitudinal direction, a range from the position 10 mm away from the end portion E1 of the first steel sheet S1 to the position 50 mm away from the end portion E1 was the multi-layer region Q2, in which the first steel sheet S1 and the second steel sheet S2 were made to overlap each other. A gap formed between the two steel sheets was 0.1 mm.

The shapes of laser weld zones L1 to L4 in the following cases 1 to 4 were observed.
(Case 1) The case in which the initial end was located within the multi-layer region Q2, and the terminal end was located within the single layer region Q1
   Length of laser weld zone L 1: 70 mm
   Position of initial end: a position 20 mm away from the end portion E1 of the first steel sheet S1 and within the multi-layer region Q2
   Position of terminal end: a position 90 mm away from the end portion E1 of the first steel sheet S1 and within the single layer region Q1
(Case 2) The case in which the initial end was located within the multi-layer region Q2, and the terminal end was located at the end portion of the single layer region Q1
   Length of laser weld zone L2: 80 mm
   Position of initial end: a position 20 mm away from the end portion E1 of the first steel sheet S1 and within the multi-layer region Q2
   Position of terminal end: the end portion E2 of the first steel sheet S1
(Case 3) The case in which the initial end and the terminal end were located at the end portion of the single layer region Q1
   Length of laser weld zone L3: 100 mm
   Position of initial end: the end portion E1 of the first steel sheet S1
   Position of terminal end: the end portion E2 of the first steel sheet S1
(Case 4) The case in which the initial end was located within the multi-layer region Q2, and the terminal end was located at the end portion of an opening portion O of the single layer region Q1
   Opening portion O: a circle having a radius of 10 mm and having the center at a position 80 mm away from the end portion E1 of the first steel sheet S1 and within the single layer region Q1
   Length of laser weld zone L4: 50 mm
   Position of initial end: a position 20 mm away from the end portion E1 of the first steel sheet S 1 and within the multi-layer region Q2
   Position of terminal end: the end portion of the opening portion O

In the case 1, two welding end portions, that is, the initial end and the terminal end, of the laser weld zone L1 were located at inner portions of the steel sheet. When the upper surface and the lower surface of the terminal end of the laser weld zone L1 in such a state were observed, the upper surface had a concave shape, thus having a smaller cross-sectional area than other portions, that is, had a shape in which stress was likely to concentrate. When the laser weld zone L1 was observed from the lower surface, the laser weld zone L1 had cracks at the terminal end.

In contrast, in the cases 2, 3, the terminal ends of the laser weld zones L2, L3 had a concave shape when the steel sheet was viewed from the end face. Further, as in the case of the case 4, also in the case in which the terminal end of the laser weld zone L4 was located at the end portion of the opening portion O of the single layer region Q1, the terminal end had a concave shape when the end portion of the opening portion O was viewed from the end face. In the cases 2 to 4, the terminal ends of the laser weld zones L2 to L4 were eliminated from the inner portions of the steel sheet and hence, cracks that occurred at the terminal end in the case 1 were not observed.

In the case 3, the initial end and the terminal end of the laser weld zone L3 were located at the end portions of the steel sheet and hence, the laser weld zone L3 had a substantially uniform width over the longitudinal direction. From such results, it can be understood that, by causing the welding end portion of the laser weld zone to be located at the end portion of the steel sheet, a stress concentration portion can be eliminated from the steel sheet and hence, it is possible to suppress rupture of the steel sheet.

The preferred embodiment(s) of the present invention has/have been described above with reference to the accompanying drawings, whilst the present invention is not limited to the above examples. A person skilled in the art may find various alterations and modifications within the scope of the appended claims, and it should be understood that they will naturally come under the technical scope of the present invention.

### REFERENCE SIGNS LIST

- 10: blank
- 13: laser weld zone
- 13a: initial end
- 13b: terminal end
- 13c: constant portion
- 100: blank
- 110: first starting material
- 111a~111d: end portion
- 120: second starting material
- 130 (131, 132, 133): laser weld zone
- 140: opening portion
- 141: end portion
- S1: first steel sheet
- S2: second steel sheet
- E1, E2: end portion (of the first steel sheet)
- L1~L4: laser weld zone
- O: opening portion
- Q1: single layer region
- Q2: multi-layer region

## Claims

1. A blank in which two or more starting materials that overlap each other are joined with each other by laser welding, wherein
the blank has a single layer region, in which only one of the starting materials is present, and a multi-layer region, in which two or more of the starting materials overlap each other,
laser welding is continuously applied to the multi-layer region and the single layer region, and
one end of a laser weld zone is located at an end portion of the single layer region of the blank, and the one end forms a concave-shaped welding end portion having a concave shape when the blank is viewed from an end face.

2. The blank according to claim 1, wherein
the single layer region of the blank has an opening portion, and
the concave-shaped welding end portion is located at an end portion of the opening portion.

3. The blank according to claim 2, wherein tensile strength of a first starting material forming the single layer region is lower than tensile strength of a second starting material that is made to overlap the first starting material in the multi-layer region.

4. The blank according to any one of claims 1 to 3, wherein each of the starting materials is a steel material.

5. A method for producing a blank in which two or more starting materials that overlap each other are joined with each other by laser welding, the method comprising:
preparing an overlapped member by making one or two or more of the starting materials overlap a partial region of one of the starting materials, the overlapped member having a single layer region, in which only one of the starting materials is present, and a multi-layer region, in which two or more of the starting materials overlap each other; and
continuously applying laser welding to the multi-layer region and the single layer region of the overlapped member such that one end of a laser weld zone of the blank is located at an end portion of the single layer region of the blank, and the one end forms a concave-shaped welding end portion having a concave shape when the blank is viewed from an end face.

6. A member including two or more starting materials that overlap each other, the member being shaped into a predetermined shape, wherein
the member has a single layer region, in which only one of the starting materials is present, and a multi-layer region, in which two or more of the starting materials overlap each other,
the multi-layer region and the single layer region are joined with each other continuously by laser welding, and
one end of a laser weld zone is located at an end portion of the single layer region of the member, and the one end forms a concave-shaped welding end portion having a concave shape when the member is viewed from an end face.

7. The member according to claim 6, wherein
the single layer region of the member has an opening portion, and
the concave-shaped welding end portion is located at an end portion of the opening portion.
